# NEUE EUROPÄISCHE PATENTSCHRIFT

(11) **EP 0 946 451 B2**
(45) Veröffentlichungstag und Bekanntmachung des Hinweises auf die Entscheidung über den Einspruch: **26.10.2005**
(45) Hinweis auf die Patenterteilung: 20.09.2000
(21) Anmeldenummer: 96937236.6
(22) Anmeldetag: 25.10.1996
(51) Int. Cl.: C04B 22/08, C04B 22/14, C04B 24/04, C04B 24/16

(54) **ERSTARRUNGS- UND ERHÄRTUNGSBESCHLEUNIGER FÜR HYDRAULISCHE BINDEMITTEL**
SOLIDIFYING AND HARDENING ACCELERATOR FOR HYDRAULIC BINDERS
ACCELERATEUR DE SOLIDIFICATION ET DE PRISE POUR LIANTS HYDRAULIQUES

(43) Veröffentlichungstag der Anmeldung: 06.10.1999
(73) Patentinhaber: BK Giulini GmbH, 67065 Ludwigshafen (DE)
(72) Erfinder: LUNKENHEIMER, Rudolf, D-55263 Wackernheim (DE); BREKER, Johannes, D-67067 Ludwigshafen (DE); POTENCSIK, Istvan, D-68169 Mannheim (DE); ALTMANN, Horst, D-67067 Ludwigshafen (DE); SEDELIES, Reinhold, D-67105 Schifferstadt (DE)
(86) Internationale Anmeldenummer: PCT/EP1996/004647
(87) Internationale Veröffentlichungsnummer: WO 1998/018740

(56) Entgegenhaltungen:
- EP-A- 0 742 179
- EP-A- 0 798 300
- EP-A1- 0 657 398
- EP-A1- 0 670 292
- EP-B- 0 076 927
- WO-A1-95/03257
- CZ-B- 257 142
- DD-A- 266 344
- DE-A1- 3 233 474
- GB-A- 2 298 860
- DATABASE WPI Section Ch, Week 9410 Derwent Publications Ltd., London, GB; Class L02, AN 94-083589 XP002033948 & ZA 9 305 646 A (HM LICENCE CO PTY LTD) , 29.Dezember 1993

## Beschreibung

Gegenstand der vorliegenden Erfindung sind stabile Erstarrungs- und Erhärtungsbeschleuniger für hydraulische Bindemittel in gelöster Form, sowie deren Herstellung und Verwendung

Aus der EP 0 76 927 B1 ist ein alkalifreier Abbindebeschleuniger auf der Basis von Aluminiurnhydroxyd bekannt Die weiteren Bestandteile dieses Mittels sind gemäß Anspruch 1 wenigstens ein wasserlösliches Sulfat und/oder Nitrat und/oder Formiat der Erdalkali und Übergangsmetalle, die dem Hauptbestandteil durch einfaches Zumisachen zugegeben werden. Aus Seite 2 , Zeile 55 geht auch eindeutig hervor, daß es sich bei diesem Mittel um eine pulverförmige Mischung handelt, die dem hydraulischen Bindemittel in fester Form zugegeben wird
Lediglich um eine übermäßige Staubentwicklung zu vermeiden, werden dem Gemisch wasserquellbare Verbindungen zugegeben.

In der DD 266 344 A1 werden kationische Aluminiumsalze, erhalten durch die Umsetzung eines gefällten Aluminiumhydroxyds mit konzentrierter Ameisen -, Essig-, oder Salpetersäure, beschrieben, die zum entsprechenden hydraulisch abbindendem Zement oder Mörtel in Form eines Pulvers zugemischt werden. Die durch die Umsetzung des Aluminiumhydroxyds mit den entsprechenden Säuren entstehenden Verbindungen lassen sich durch eine allgemeine Formel beschreiben,, z.B. Al(OH)₂R x H₂O, Al(OH) R₂ xH₂O oder AlR₃ x H₂O. Diese Aluminiumsalze enthalten keine Sulfat und Chloridionen.

In dar FR- 2.471.955 wird ein Verfahren zur beschleunigten Abbindung von Zement beschrieben, das dadurch gekennzeichnet ist, daß als beschleunigendes Agens Bisulfit-Formaldehyd, Calciumformiat und Calciumnitrat in Form einer Lösung verwendet wird, z.B. siehe Seite 3, ab Zeilen 19, Beispiele.

Schließlich wurde in der EP 0 657 398 A1 ebenfalls ein Verfahren zur Abbindebeschleunigung von hydraullschen Bindemitteln bekanntgemacht, das dadurch charakaterisiert ist, daß das beschleunigende Agens eine Mischung ist, die mindestens ein wasserlösliches Sulfat eines mehrwertigen Kations, insbesondere des Aluminiums und eine weitere wasserunlösliche Komponente, z.B. Calciumsulfoaluminat, Calciumaluminat, basisches Aluminiumsulfat und noch mindestens eine weitere Komponente enthält. Diese weitere Komponente kann gemäß Anspruch 24 ein Dispergiermittel, ein anorganisches. Bindemittel, ein Verflüssiger oder ein Entlüftungsmittel sein.
Der Abbindebeschleuniger soll auch in Form einer wässrigen Dispersion angewendet werden können.
Abbindebeschleuniger sind besonders interessant für die Praxis, wenn sie in flüssiger Form verwendbar sind.
Gegenüber den festen Beschleunigern ist im wesentlichen ihre bessere Dosierbarkeit, die schnellere Freigabe der Wirksubstanz(en) und natürlich die vemachlässigbare Staub- bzw. Aerosolentwicklung bei der Handhabung hervorzuhaben.
Die klassischen flüssigen, alkalischen Beschleuniger, z.B. Natriumaluminat und Wasserglas wirken nicht nur wegen ihres hohen pH-Wertes ätzend, sondern führen auch durch den hohen Alkalimetalleintrag in den Beton zu z.T. massivem Abfall der Endfestigkeit.

Neuere, flüssige Beschleuniger bestehen hauptsächlich aus wässrigen Suspensionen von basischen Aluminiurnsulfaten. Sie sind jedoch, im allgemeinen nicht froststabil, neigen zur Sedimentation und zeigen, obwohl sie in flüssiger Form beim Naßspritzverfahren anwendbar wären, eine ungenügende Frühfestigkeitsentwicklung und wirken auch je nach Zementtyp nur noch schwach beschleunigend.
Andere sich im Handel befindliche konzentrierte Aluminiumsalzlösungen z.B. Al₂(SO₄)₃mit ca. 8 % Al₂O₃ oder Aluminiumtriformiatlösungen mit ca. 5 % Al₂O₃ sind zumindest für das Naßspritzverfahren nicht geeignet, da sie wegen des erhöhten Wassereintrags in die Betonmasse und des damit verbundenen erhöhten Wasser-Zement-Faktors eine unerwünschte niedrige Druckfestigkeit bedingen.

Der vorliegenden Erfindung lag daher die Aufgabe zugrunde, einen konzentrierten, in Wasser gelösten Erstarrungs- und Emärtungsbeschleuniger für hydraulische Bindemittel zur Verfügung zu stellen, der nicht die Nachteile der klassischen flüssigen Beschleuniger, wie Natriumaluminat bzw. Wasserglas besitzt und sich für das Naßspritzverfahren gut eignet.

Die Aufgabe konnte überraschenderweise durch neue flüssige Erstarrungs- und Erhärtungsbeschleuniger für hydraulische Bindemittel wie Zement gelöst werden, die durch ein Verfahren erhältlich sind, das dadurch gekennzeichnet ist, daß folgende Komponenten
Komponente a: basische Aluminiumsalze und/oder Alminiumhydroxyd
Komponente b: Aluminiumsulfat und/oder Schwefelsäure
Komponente c: organische Carbonsäuren oder Mischungen zumindest zwei der organischen Carbonsäuren
Komponente d: Aluminiumsalze der organischen Carbonsäuren
Komponente e: organische und/oder anorganische Sulfate und/oder Hydrogensulfate und/oder Carbonate und/oder Hydrogencarbonate und/oder Erdalkalioxyde und/oder Erdalkalihydroxyde bei Temperaturen bis 150 °C in Wasser zur Reaktion gebracht werden, so daß dabei eine Lösung erhalten wird, wobei
   1. alle Komponenten oder eine Auswahl der Komponenten miteinander reagieren, so daß die Molverhältnisse des Aluminiums zu Sulfat im Endprodukt 0,83 bis 13,3 und die Molverhältnisse des Aluminiums zur organischen Carbonsäure 0,67 bis 33,3 betragen oder
   2. alle Komponenten außer Komponente e oder eine Auswahl der Komponenten außer Komponente e miteinander reagieren, so daß die Molverhältnisse des Aluminiums zu Sulfat im Endprodukt 0,83 bis 13,3 und die Molverhältnisse des Aluminiums zur organischen Carbonsäure im Endprodukt 0,67 bis 33,3 betragen oder
   3. die Komponente e nachträglich im Reaktionsprodukt nach Punkt 2. aufgelöst wird.
   Als basische Aluminiumsalze werden bevorzugt die basischen Sulfate, Carbonate, Carbonatsulfate und Nitrate und Mischungen von mindestens zwei dieser Komponenten eingesetzt.
   Als organische Carbonsäuren kommen im wesentlichen die Monocarbonsäuren Hydroxycarbonsäuren und Dicarbonsäuren, z.B. Ameisensäure, Essigsäure, Glycolsäure, Milchsäure und deren Mischungen in Betracht.
   Als anorganische und organische Sulfate bzw. Hydrogensulfate werden die Erdalkalisalze und/oder Triethanolaminsalze und/oder Diethanolaminsalze der Schwefelsäure verwendet. Aber auch die Alkalisalze der Schwefelsäure kommen als Sulfat oder Hydrogensulfat zur Verwendung.
   Als Carbonate und/oder Hydrogencarbonate können die Erdalkalisalze verwendet werden. Weiterhin ist es möglich, auch Erdalkalioxyde oder Erdalkalihydroxyde anzuwenden.
   Die erfindungsgemäßen Abbindeschleuniger können je nach Bedarf zusammen mit anderen Verbindungen wie z.B. Abbindeverzögerem, Verflüssigern und Rückprallverminderern eingesetzt werden.
   Die folgenden Beispiele beleuchten den Erfindungsgegenstand näher ohne diesen zu beschränken:

### Herstellungsbeispiele:

### Beispiel 1

675 g basisches Aluminiumcarbonat (17,77 % Al₂O₃) wurden in 90 g Ameisensäure 85 %ig aufgeschlämmt und mit 324 g Aluminiumsulfat (17,5 % Al₂O₃) versetzt. Unter Rühren wurde bei einer Temperatur von 50 bis 60 °C nach 1,5 Stunden eine fast klare Lösung erhalten. Die Lösung ist über einen Zeitraum von mehr als 3 Monaten stabil .

### Beispiel 2

490 g basisches Aluminiumsulfat (16,7 % Al₂O₃) wurden in 36,9 g Milchsäure 80 %ig aufgeschlämmt und mit 375 g Aluminiumsulfat (17,5 % Al₂O₃) versetzt. Unter Rühren wurde bei einer Temperatur von 51 bis 72 °C nach 1,5 Stunden eine leicht trübe Lösung erhalten.

### Beispiel 3

500 g basisches Aluminiumsulfat (17,8 % Al₂O₃) wurden mit 76 g Oxalsäure-Dihydrat und mit 375 g Aluminiumsulfat (17,5 % Al₂O₃) versetzt. Unter Rühren wurde bei einer Temperatur von 75 °C nach 1 Stunde eine klare Lösung erhalten. Die Lösung wurde auf ein Gewicht von 846,5 g aufkonzentriert.

### Beispiel 4

101 kg basisches Aluminiumcarbonat (19,15 % Al₂O₃) wurden in 8,2 kg Wasser und 15,2 kg Ameisensäure 85 %ig aufgeschlämmt und mit 72 kg Aluminiumsulfat (17,5 % Al₂O₃) versetzt. Unter Rühren wurde bei einer Temperatur von 35 bis 80 °C nach 3 Stunden eine fast klare Lösung erhalten. Die Lösung ist über einen Zeitraum von mehr als 3 Monaten stabil.

### Beispiel 5

101 kg basisches Aluminiumcarbonat (19,15 % Al₂O₃) wurden im 8,3 kg Wasser und 14,5 kg Ameisensäure 85 %ig aufgeschlämmt und mit 65,1 kg Aluminiumsulfat (17,5 % Al₂O₃) versetzt. Unter Rühren wurde bei einer Temperatur von 33 bis 62 °C nach 4 Stunden eine fast klare Lösung erhalten.

### Beispiel 6

In 500 g der Lösung aus Beispiel 5 wurden 67,7 g Magnesiumsulfat (27,5 MgO) gelöst.

### Beispiel 7

105,5, g Aluminiumtriformiat (11,7 % Al, 61,3 % Ameisensäure) wurden mit 356,3 g basischem Aluminiumcarbonatsulfat (18,4 % Al₂O₃) und 375 g Aluminiumsulfat (17,5 % Al₂O₃) vermischt. Unter Rühren wurde bei einer Temperatur von 75 °C nach 90 min eine leicht trübe Lösung erhalten.

### Vergleichsbeispiel 1:

Dispersion eines basischen Aluminiumcarbonatsulfates mit 16,5 % Al₂O₃

### Vergleichsbeispiel 2:

Dispersion eines basischen Aluminiumsulfates mit 16 % Al₂O₃

**Tabelle 1**

| **Wirkung der erfindungsgemäßen Verbindungen auf die Abbindezeiten** | | | | |
|---|---|---|---|---|
| **Beschleuniger aus** | **Konz. bezgl. Portlandzement** | **Zement** | **Abbindeanfang (sec)** | **Abbindeende (sec)** |
| Beispiel 1 | 10 % | A | 195 | 390 |
| Beispiel 2 | 10 % | A | 240 | 450 |
| Beispiel 3 | 10 % | A | 240 | 360 |
| Beispiel 4 | 7,3 % | B | 75 | 180 |
| Beispiel 5 | 5 % | C | 135 | 240 |
| Beispiel 5 | 7,5 % | B | 80 | 200 |
| Beispiel 7 | 6,5 % | B | 90 | 240 |
| Vergleichsbeispiel 1 | 5 % | A | >500 | n.b. |
| Vergleichsbeispiel 1 | 10 % | A | >500 | n.b. |
| | | | | |
| Vergleichsbeispiel 2 | 5 % | A | >500 | n.b. |
| Vergleichsbeispiel 2 | 10 % | A | >500 | n.b. |
| | | | | |
| Vergleichsbeispiel 1 | 10 % | B | >500 | n.b. |
| Vergleichsbeispiel 1 | 10 % | C | >500 | n.b. |

A, B und C sind Portlandzemente verschiedener Hersteller.

Die Abbindezeiten wurden in Anlehnung an die Vicat-Methode ermittelt. Eingesetzt wurden jeweils 290 g Portlandzement und 2,9 g Verflüssiger (1%). Der W/Z Wert betrug 0,41. Der Zementleim wurde 30 min gerührt und danach beschleunigt.

### Versuche im Naßspritzverfahren mit den erfindungsgemäßen Abbindebeschleunigern

**Maschine :** Schwing Betonpumpe PB 750 RE mit Beschleuniger-Dosiereinrichtung Top-Shot Düse

| | |
|---|---|
| Schlauchdurchmesser | 65 mm |
| Spritzschlauchdurchmesser | 50 mm |
| Spritzschlauchlänge | 5 m |
| Materialdurchsatz in kg/min | 162 |
| Rückprall in % | 3,5 |
| Sieblinie | B8 |
| Zementgehalt des PZ- C in kg/m³ | 425 |
| W/Z- Wert | 0,485 |
| Verflüssiger in % | 1,3 |
| Verzögerer in % | 0,1 |
| Beschleuniger | aus Beispiel 5, 6,6 % |
| Frühfestigkeit | Kaindl-Meyco Verfahren |
| Festbetonprüfung | Bohrkern Ø 10 cm |
| Ausbreitmaß | ca. 50 cm |

**Tabelle 2:**

| **Druckfestigkeiten in N/mm**^{**2**} | | |
|---|---|---|
| **Zeit** | **Beschleuniger aus Beispiel 5, 6,6%** | **ohne Beschleuniger** |
| 1 h | 1,4 | - |
| 2 h | 2,0 | |
| 4 h | 3,7 | - |
| 6 h | 6,9 | - |
| 8 h | 9,5 | - |
| 24 h | 14,1 | - |
| 2 d | 29 | - |
| 7 d | 36 | - |
| 28 d | 51 | 55 |

Alle Daten basieren auf 2 Parallelversuchen

**Tabelle 3:**

| **Wirkung der erfindungsgemäßen Verbindungen auf die Frühfestigkeitsentwicklung** | | | | |
|---|---|---|---|---|
| **Frühfestigkeiten in N/mm**^{**2**} **mit Beschleunigern aus :** | | | | |
| Zeit(h) | Bsp. 4 (5,9 %) | Bsp. 6 (6,7%) | Bsp. 4 (gefrost. 5,9%) | Bsp. 6 (gefrost. 6) |
| 2 | 1,41 | 1,56 | 1,5 | 1,6 |
| 6 | 4,5 | 5,4 | 4,9 | 6,2 |
| 8 | 5,8 | 7,2 | 6,1 | 8,2 |
| 24 | 17,9 | 21,8 | 19,0 | 22,5 |

Die Festigkeiten wurden in Anlehnung an DIN 1164, Teil 7 untersucht. Dabei wurden folgende Modifikationen vorgenommen:

| |
|---|
| Zuschlag: 0-8 mm |
| W/Z Wert: 0,55 |
| Verflüsiger: 1,5 % |
| Beschleunigerzugabe: 60 min nach Herstellung des Betons |
| Portlandzement: 400 kg/m³ |
| (Sorte B) |

## Patentansprüche

1. Für die Verwendung im Nassspritzverfahren geeigneter Erstarrungs- und Erhärtungsbeschleuniger für hydraulische Bindemittel, erhältlich durch ein Verfahren, das **dadurch gekennzeichnet ist, daß** folgende Komponenten
Komponente a: basische Aluminiumsalze und/oder Aluminiumhydroxyd
Komponente b: Aluminiumsulfat und/oder Schwefelsäure
Komponente c: organische Carbonsäuren oder Mischungen zumindest zwei der organischen Carbonsäuren
Komponente d: Aluminiumsalze der organischen Carbonsäuren
Komponente e: organische und/oder anorganische Sulfate und/oder Hydrogensulfate und/oder Carbonate und/oder Hydrogencarbonate und/oder Erdalkalioxyde und/oder Erdalkalihydroxyde
bei Temperaturen bis 150 °C in Wasser zur Reaktion gebracht werden, so daß dabei eine Lösung erhalten wird, wobei
1. alle Komponenten oder eine Auswahl der Komponenten miteinander reagieren, so daß die Molverhältnisse des Aluminiums zu Sulfat im Endprodukt 0,83 bis 13,3 und die Molverhältnisse des Aluminiums zur organischen Carbonsäure 0,67 bis 33,3 betragen oder
2. alle Komponenten außer Komponente e oder eine Auswahl der Komponenten außer Komponente e miteinander reagieren, so daß die Molverhältnisse des Aluminiums zu Sulfat im Endprodukt 0,83 bis 13,3 und die Molverhältnisse des Aluminiums zur organischen Carbonsäure im Endprodukt 0,67 bis 33,3 betragen oder
3. die Komponente e nachträglich im Reaktionsprodukt nach Punkt 2, aufgelöst wird.

2. Erstarrungs- und Erhärtungsbeschleuniger für hydraulische Bindemittel nach Anspruch 1, **dadurch gekennzeichnet, daß** als basische Aluminiumsalze die basischen Sulfate, Carbonate, Carbonatsulfate und Nitrate und Mischungen von mindestens zwei dieser Komponenten eingesetzt werden.

3. Erstarrungs- und Erhärtungsbeschleuniger für hydraulische Bindemittel nach den Ansprüchen 1 und 2, **dadurch gekennzeichnet, daß** als organische Carbonsäuren Monocarbonsäuren Hydroxycarbonsäuren und Dicarbonsäuren und deren Mischungen eingesetzt werden.

4. Erstarrungs- und Erhärtungsbeschleuniger für hydraulische Bindemittel nach den Ansprüchen 1 bis 3, **dadurch gekennzeichnet, daß** als Sulfate bzw. Hydrogensulfate die Erdalkalisalze und/oder Triethanolaminsalze und/oder Diethanolaminsalze der Schwefelsäure verwendet werden.

5. Erstarrungs- und Erhärtungsbeschleuniger für hydraulische Bindemittel nach den Ansprüchen 1 bis 4, **dadurch gekennzeichnet, daß** als Carbonate die Erdalkalicarbonate und als Hydrogencarbonate die Erdalkalihydrogencarbonate verwendet werden.

6. Erstarrungs- und Erhärtungsbeschleuniger für hydraulische Bindemittel nach den Ansprüchen 1 bis 5, **dadurch gekennzeichnet, daß** als organische Carbonsäuren Ameisensäure, Essigsäure, Glycolsäure, Milchsäure und Mischungen von mind. zwei dieser Komponenten eingesetzt werden.

7. Erstarrungs- und Erhärtungsbeschleuniger für hydraulische Bindemittel nach den Ansprüchen 1 bis 6, **dadurch gekennzeichnet, daß** als Sulfate bzw. Hydrogensulfate die Alkalisalze der Schwefelsäure verwendet werden.

8. Erstarrungs- und Erhärtungsbeschleuniger für hydraulische Bindemittel nach den Ansprüchen 1 bis 7, **dadurch gekennzeichnet, daß** sie in Kombination mit anderen Verbindungen, wie z.B. mit Abbindeverzögerem , Verflüssigern oder Rückprallverminderern eingesetzt werden.

9. Zement, Mörtel und Beton enthaltend die Erstarrungs- und Erhärtungsbechleuniger gemäß den Ansprüchen 1 bis 8

## Claims

1. Solidifying and hardening accelerator for hydraulic binders, suitable for use in the wet-injection process, obtainable by a process which is **characterised in that** the following components:
component a: basic aluminium salts and/or aluminium hydroxide
component b: aluminium sulphate and/or sulphuric acid
component c: organic carboxylic acids or mixtures of at least two of the organic carboxylic acids
component d: aluminium salts of the organic carboxylic acids
component e: organic and/or inorganic sulphates and/or hydrogen sulphates and/or carbonates and/or hydrogen carbonates and/or alkaline earth metal oxides and/or alkaline earth metal hydroxides
are reacted in water at temperatures of up to 150°C, so as to obtain a solution, whilst
1. all the components or a selection of the components react with one another so that the molar ratios of the aluminium to sulphate in the end product are from 0.83 to 13.3 and the molar ratios of the aluminium to the organic carboxylic acid are 0.67 to 33.3 or
2. all the components apart from component e or a selection of the components apart from component e react with one another, so that the molar ratios of the aluminium to sulphate in the end product are from 0.83 to 13.3 and the molar ratios of the aluminium to the organic carboxylic acid in the end product are from 0.67 to 33.3 or
3. component e is subsequently dissolved in the reaction product according to point 2.

2. Solidifying and hardening accelerator for hydraulic binders according to claim 1, **characterised in that** the basic sulphates, carbonates, carbonate sulphates and nitrates and mixtures of at least two of these components are used as basic aluminium salts.

3. Solidifying and hardening accelerator for hydraulic binders according to claims 1 and 2, **characterised in that** monocarboxylic acids, hydroxycarboxylic acids and dicarboxylic acids and mixtures thereof are used as organic carboxylic acids.

4. Solidifying and hardening accelerator for hydraulic binders according to claims 1 to 3, **characterised in that** the alkaline earth metal salts and/or triethanolamine salts and/or diethanolamine salts of sulphuric acid are used as the sulphates or hydrogen sulphates.

5. Solidifying and hardening accelerator for hydraulic binders according to claims 1 to 4, **characterised in that** the alkaline earth metal carbonates are used as the carbonates and the alkaline earth metal hydrogen carbonates are used as the hydrogen carbonates.

6. Solidifying and hardening accelerator for hydraulic binders according to claims 1 to 5, **characterised in that** formic acid, acetic acid, glycolic acid, lactic acid and mixtures of at least two of these components are used as the organic carboxylic acids.

7. Solidifying and hardening accelerator for hydraulic binders according to claims 1 to 6, **characterised in that** the alkali metal salts of sulphuric acid are used as the sulphates or hydrogen sulphates.

8. Solidifying and hardening accelerator for hydraulic binders according to claims 1 to 7, **characterised in that** they are used in conjunction with other compounds, such as, for example, with setting retarders, liquefiers or resilience reducers.

9. Concrete, mortar and cement containing the solidifying and hardening accelerator according to the claims 1 to 8.

## Revendications

1. Accélérateur de solidification et de prise pour liants hydrauliques, approprié pour le procédé de pulvérisation humide, pouvant être obtenu par un procédé qui est **caractérisé en ce que** l'on fait réagir les composants suivants :
composant a : sel basique d'aluminium et/ou hydroxyde d'aluminium ;
composant b : sulfate d'aluminium et/ou acide sulfurique ;
composant c : acide carboxylique organique ou mélange d'eau moins deux acides carboxyliques organiques ;
composant d : sel d'aluminium des acides carboxyliques organiques ;
composant e : sulfate et/ou 2 hydrogénosulfate et/ou carbonate et/ou hydrogénocarbonate organiques et/ou inorganiques, et/ou oxyde alcalino-terreux et/ou hydroxyde alcalino-terreux,
dans l'eau à une température de jusqu'à 150°C, de sorte que l'on obtienne une solution, où
1- tous les composants ou un choix des composants réagissent les uns avec les autres, de sorte que le rapport molaire de l'aluminium au sulfate se situe dans le produit final, dans l'intervalle allant de 0,83 à 13,3 et le rapport molaire de l'aluminium à l'acide carboxylique organique se situe dans l'intervalle allant de 0,67 à 33,3, ou
2- tous les composants sauf le composant e ou un choix des composants sauf le composant e réagissent les uns avec les autres, de sorte que le rapport molaire de l'aluminium au sulfate se situe dans le produit final, dans l'intervalle allant de 0,83 à 13,3 et le rapport molaire de l'aluminium à l'acide carboxylique organique dans le produit final, se situe dans l'intervalle allant de 0,67 à 33,3, ou
3- le composant e est dissous ultérieurement dans le produit de réaction du point 2.

2. Accélérateur de solidification et de prise pour liants hydrauliques suivant la revendication 1, **caractérisé en ce que** l'on met en oeuvre comme sel basique d'aluminium, un sulfate, carbonate, carbonatosulfate, nitrate basiques ou mélanges d'au moins deux de ces composants.

3. Accélérateur de solidification et de prise pour liants hydrauliques suivant les revendications 1 et 2, **caractérisé en ce que** l'on met en oeuvre comme acide carboxylique organique, un monoacide carboxylique, un acide hydroxycarboxylique, un diacide carboxylique ou leurs mélanges.

4. Accélérateur de solidification et de prise pour liants hydrauliques suivant les revendications 1 à 3, **caractérisé en ce que** l'on utilise comme sulfate ou hydrogénosulfate, un sel alcalino-terreux et/ou sel de triéthanolamine et/ou sel de diéthanolamine de l'acide sulfurique.

5. Accélérateur de solidification et de prise pour liants hydrauliques suivant les revendications 1 à 4, **caractérisé en ce que** l'on utilise comme carbonate, un carbonate alcalino-terreux et comme hydrogénocarbonate, un hydrogénocarbonate alcalino-terreux.

6. Accélérateur de solidification et de prise pour liants hydrauliques suivant les revendications 1 à 5, **caractérisé en ce que** l'on met en oeuvre comme acide carboxylique organique, l'acide formique, l'acide acétique, l'acide glycolique, l'acide lactique et les mélanges d'au moins deux de ces composants.

7. Accélérateur de solidification et de prise pour liants hydrauliques suivant les revendications 1 à 6, **caractérisé en ce que** l'on utilise comme sulfate et respectivement, hydrogénosulfate, un sel alcalin de l'acide sulfurique.

8. Accélérateur de solidification et de prise pour liants hydrauliques suivant les revendications 1 à 7, **caractérisé en ce qu'**il est mis en oeuvre avec d'autres composés, comme par exemple un retardateur de prise, un fluidifiant ou un agent de diminution du rebondissement.

9. Ciment, mortier et béton contenant l'accélérateur de solidification et de prise suivant les revendications 1 à 8.
